# EUROPEAN PATENT SPECIFICATION

(11) **EP 1 850 695 B1**
(45) Date of publication and mention of the grant of the patent: **09.11.2011**
(21) Application number: 06706816.3
(22) Date of filing: 10.02.2006
(51) Int. Cl.: A47B 57/26, F16B 12/32

(54) **CONSTRUCTIVE STRUCTURE FOR FURNITURE**
AUFBAUSTRUKTUR FÜR MÖBELSTÜCKE
STRUCTURE DE CONSTRUCTION POUR MEUBLES

(30) Priority: 22.02.2005 IT MI20050026
(43) Date of publication of application: 07.11.2007
(73) Proprietor: Marca Clac di Cattaneo Sergio, 20052 Monza (IT)
(72) Inventor: CATTANEO, Sergio, I-20052 Monza (MI) (IT)
(74) Representative: Coggi, Giorgio
(86) International application number: PCT/EP2006/001186
(87) International publication number: WO 2006/089647

(56) References cited:
- BE-A- 562 799
- DE-U1- 20 309 331
- US-A- 3 574 367
- US-A- 4 163 537
- US-A- 4 583 359

## Description

The present invention relates to a constructive structure for furniture - in particular for furniture items of large dimensions, such as cabinets - which comprises a metal frame (consisting of uprights and cross members connected to each other by joints) closed by doors and/or by wings of various types (sliding, swivelling, etcetera).

Constructive structures for furniture are known, comprising a metal frame closed by doors and/or by wings, which are normally produced in prefixed dimensions and marketed in assembly "kits" comprising - in addition to the doors and/or wings and to the assembly and finishing accessories (handles; hinges, if any; carriages for sliding wings; etcetera) - the uprights and the cross members already cut and, often, provided at least at one end with means able to couple them to each other, see for example US 4,583,359.

Known constructive structures, having prefixed dimensions, are not able to meet specific user needs (consider, purely by way of example, the fact that home ceilings do not always have the same distance from the floor and/or that the dimensions of a space in which a wall cabinet is to be placed are different on a case by case basis) and therefore they require (or may require) long and costly adaptation work to be performed in place.

Object of the present invention is obtain a constructive structure able to overcome the limitations of known structures; this object is achieved by means of a constructive structure that has the characterising elements illustrated in claim 1.

Additional advantageous characteristics of the invention are described in the dependent claims.

The invention shall now be described with reference to an embodiment provided purely by way of non limiting example shown in the appended figures, where:
- Figure 1 schematically shows a perspective view of a furniture item with sliding wings realised according to the invention;
- Figure 2 schematically shows a front view, a top view and a perspective view of a portion of a first section bar;
- Figure 3 schematically shows a front view, a top view, a lateral view and a perspective view of a portion of a second section bar;
- Figure 4 schematically shows an exploded front view, an exploded top view, an exploded lateral view and an exploded perspective view of a joint able to couple two section bar portions to each other;
- Figures 5 and 6 schematically show a front view, a top view, a lateral view and a perspective view of a carriage able to bear an outer wing, respectively an inner wing in a structure according to the invention;
- Figures 7 and 8 schematically show a front view, a lateral view and two perspective views of the means able to guide an outer wing, respectively an inner wing;
- Figures 9 and 10 schematically show a front view, a top view, a lateral view and a perspective view of means able to limit the travel of a wing, as well as the aforesaid means inserted in a portion of the second section bar of Figure 3.

In the appended figure, the corresponding elements shall be identified by the same numeric references.

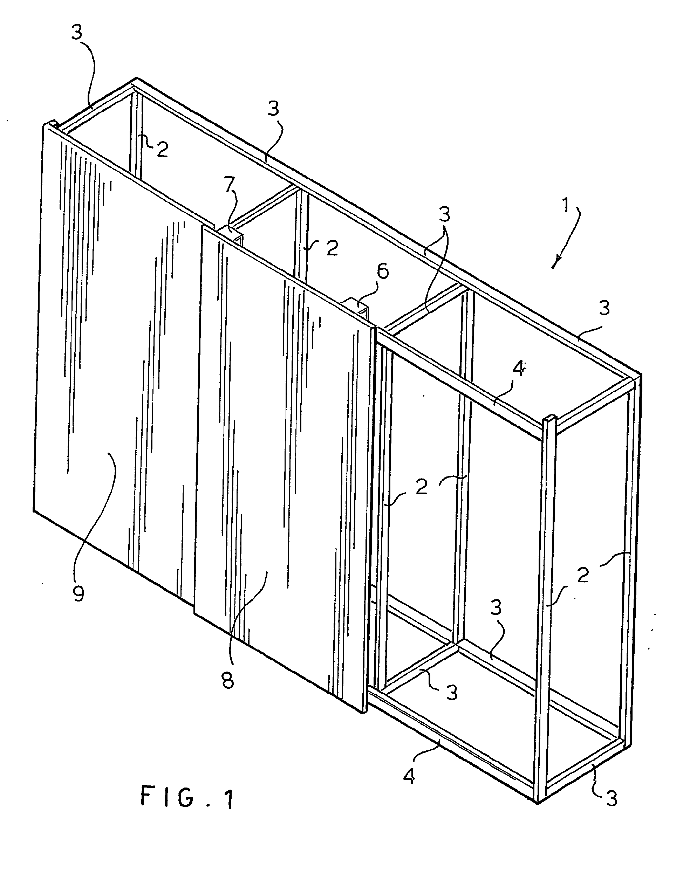

Figure 1 schematically shows a perspective view of the constructive structure 1, according to the invention, of a furniture item with sliding wings.

The constructive structure 1 comprises a frame constituted by uprights 2 and by cross members (3, 4) connected to each other (at right angle) by joints 5, each of which is able to connect an upright 2 to an end of a cross member (3, 4).

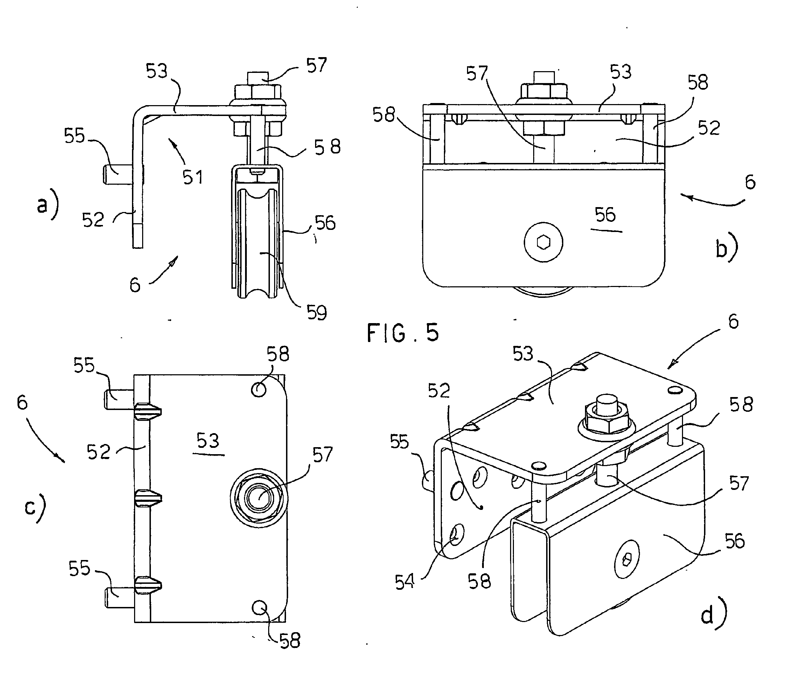

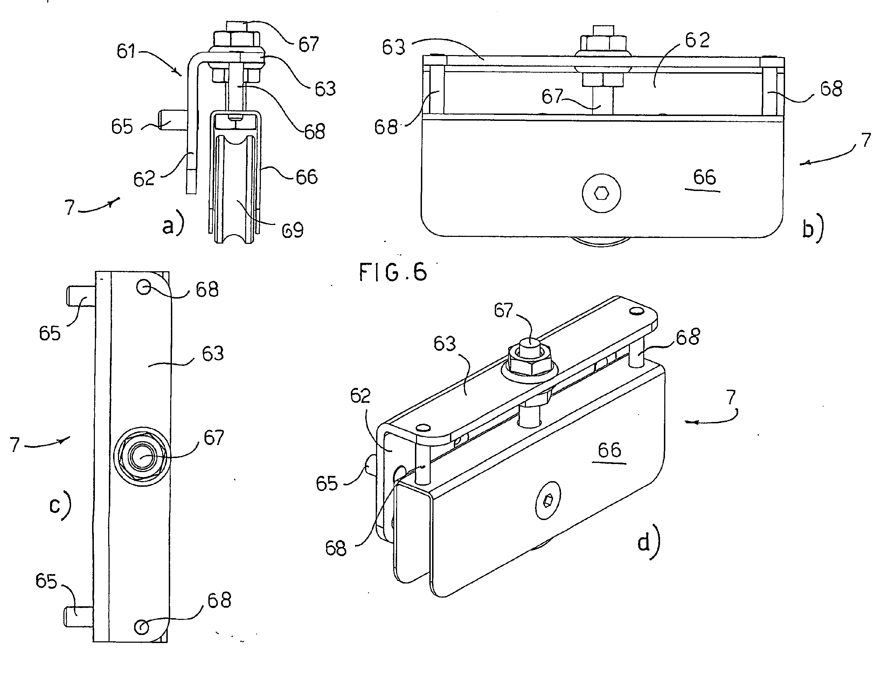

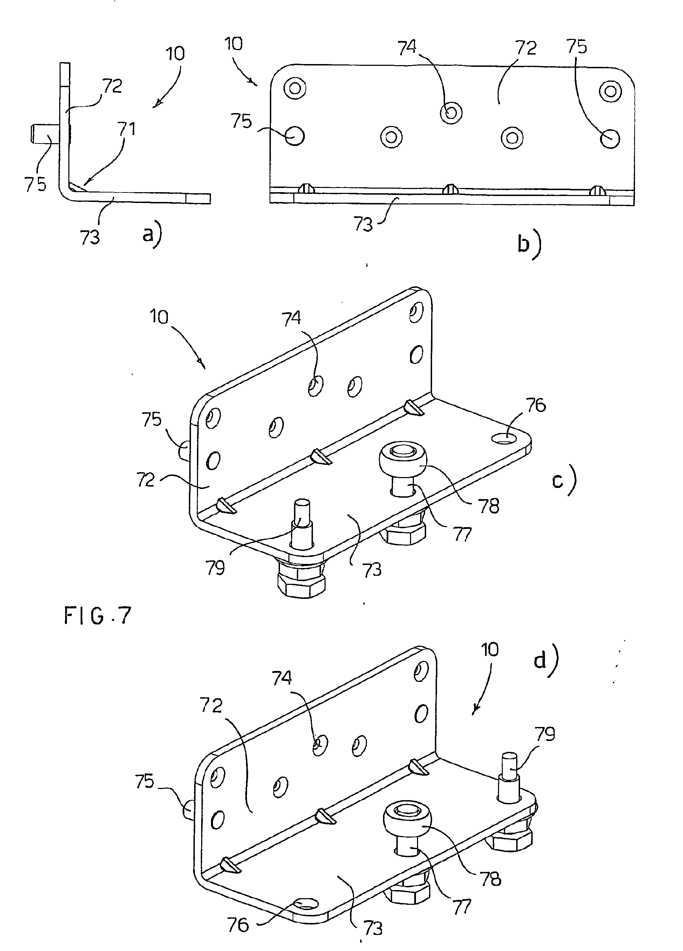

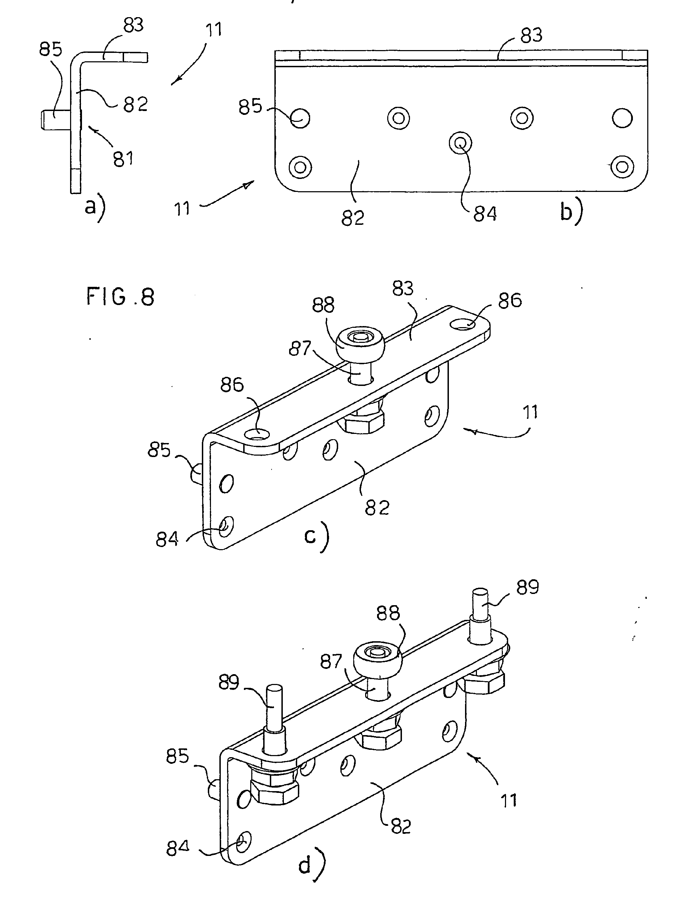

Figure 1 also shows the sliding wings 8 and 9, which are borne by carriages (6, respectively 7; Figures 5 and 6) slidable on the cross members 4 positioned on the front part of the furniture item and guided by guiding means (10, respectively 11; Figures 7 and 8) positioned in the lower part of the wings (8, 9) and slidable on additional cross members 4, not visible in Figure 1 because they are covered by the wings themselves.

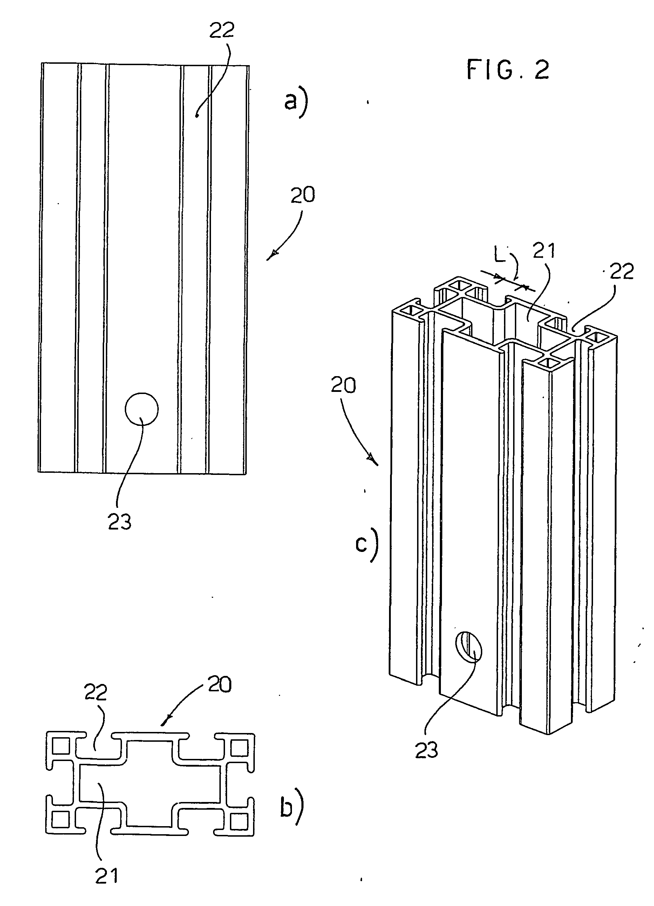

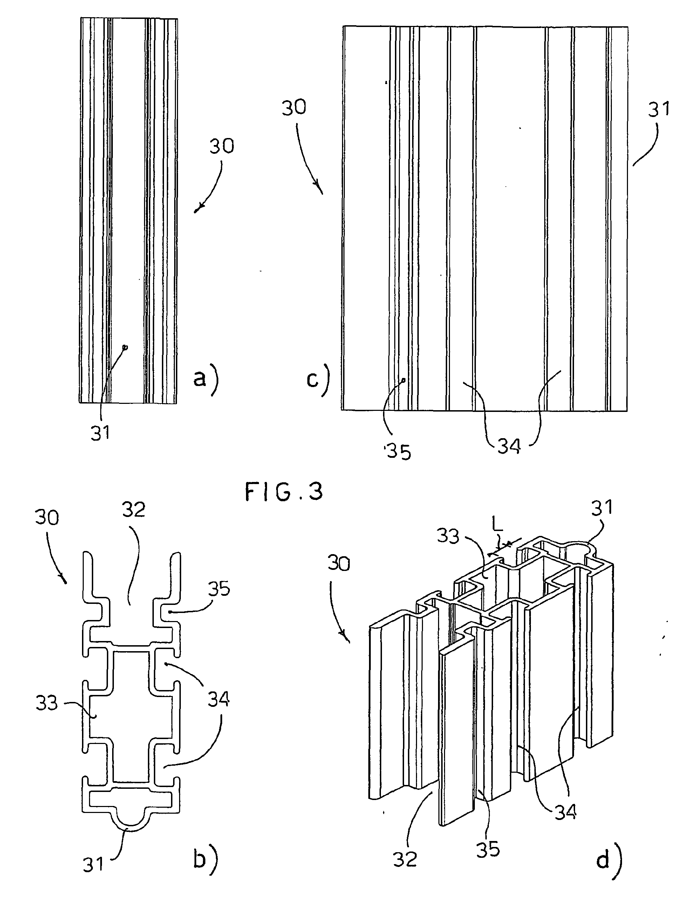

Advantageously, the uprights 2 and the cross members 3 are constituted by portions of the metal section bar 20 shown in Figure 2 whilst the cross members 4 are constituted by portions of the metal section bar 30 shown in Figure 3.

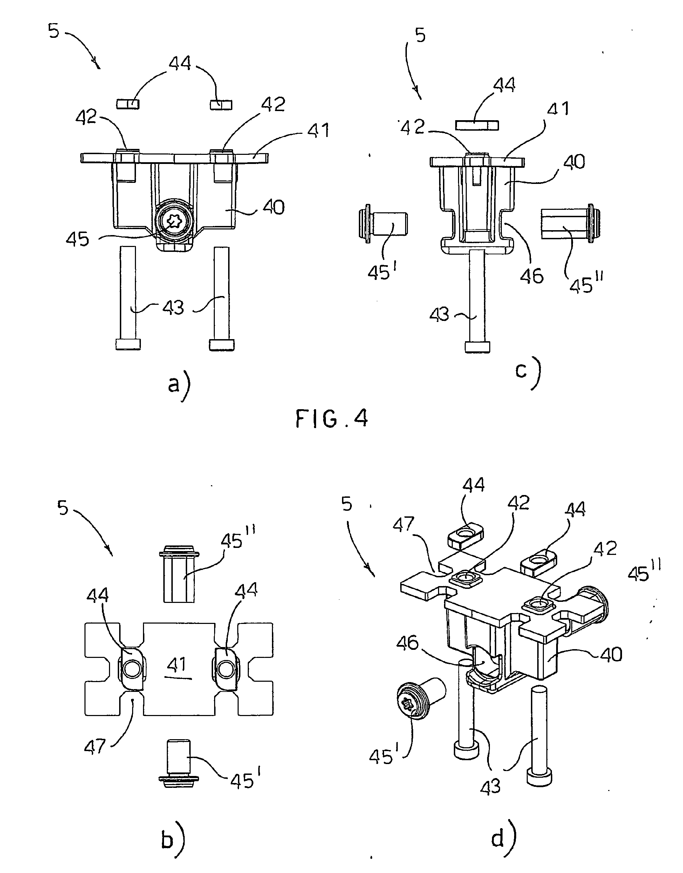

The joints (only one whereof is designated in Figure 1 with the numeric reference 5 for graphic representation simplicity) shall be better described with reference to Figure 4.

If the furniture item does not comprise the sliding wings 8 and 9, the cross members 4 positioned on the front part of the furniture item can also be constituted by portions of the metal section bar 20 shown in Figure 2.

Figure 2 schematically shows a front view (Figure 2a), a top view (Figure 2b), and a perspective view (Figure 2c) of a portion of a first section bar 20 to be used to construct the uprights 2 and the cross members 3, including the cross members positioned on the front part of the structure 1 if the wings 8 and 9 are not present.

The first section bar 20 has a substantially rectangular section with two mutually orthogonal axes of symmetry and it has a central longitudinal compartment 21 whose shape is complementary to that of the body 40 of the joint 5 (Figure 4) and a plurality of lateral longitudinal compartments (only one whereof is designated with the numeric reference 22 in each of the three views of Figure 2) able to house blocking means 44 belonging to the joint 5, which shall be described with reference to Figure 4.

In the embodiment shown in Figure 2, the first section bar 20 has two lateral compartments 22 on each of its longer sides and one lateral compartment 22 on each of its shorter sides.

Figures 2a and 2c also show a through hole 23, drilled at least at one end of a portion of the first section bar 20, in which are engaged fastening means 45, belonging to the joint 5 and able to fasten the joint 5 to the portion of the first section bar 20, which shall be described with reference to Figure 4.

Figure 3 schematically shows a front view, a top view, a bottom view and a perspective view of a portion of a second section bar 30, used to construct the cross members 4 positioned on the front part of the structure 1 if the furniture item comprises the sliding wings 8 and 9.

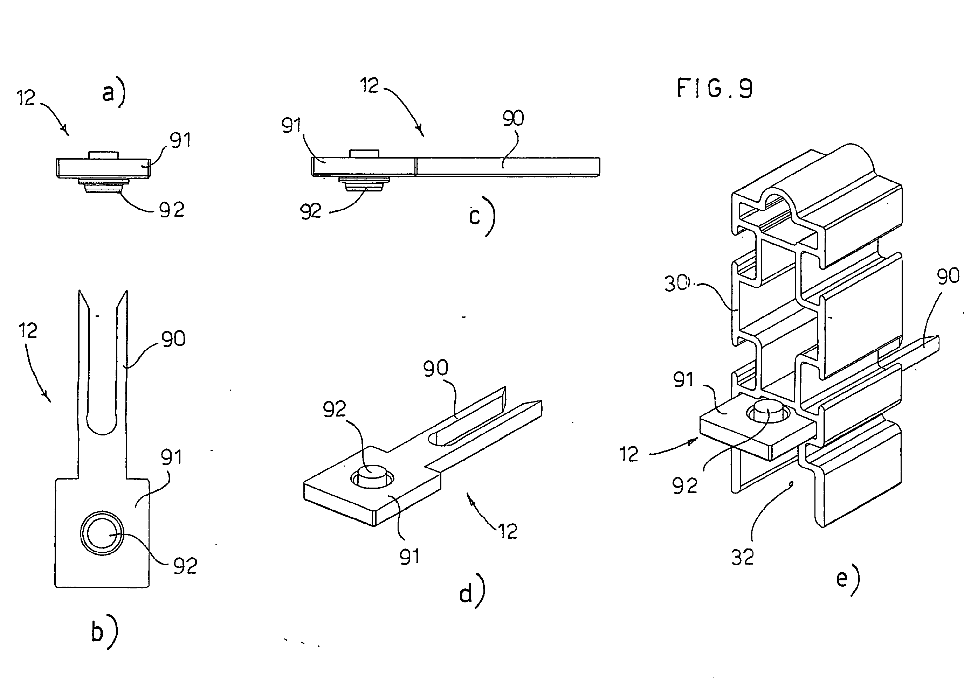

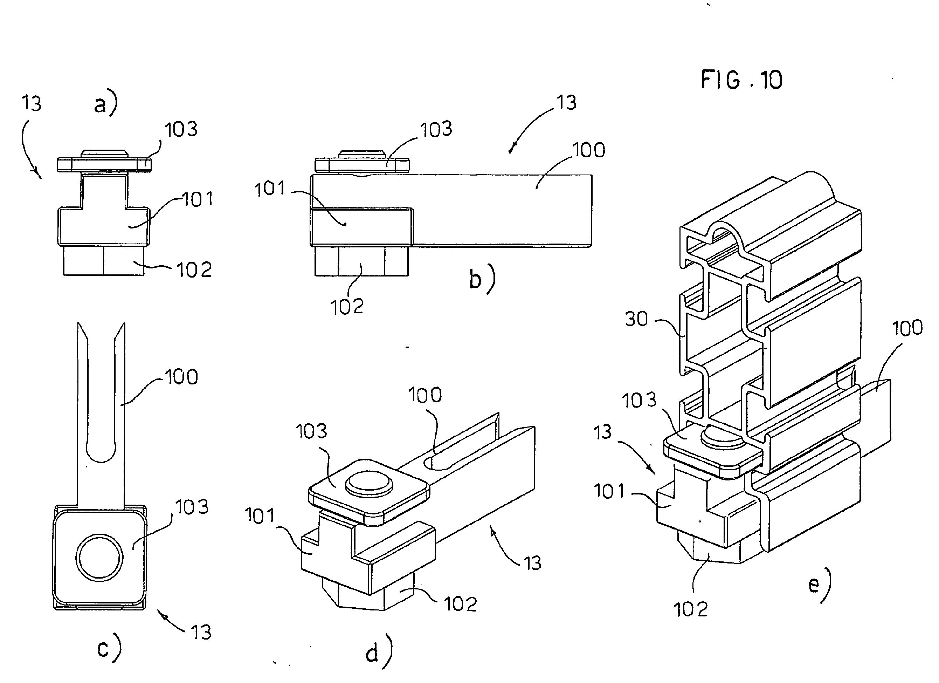

The second section bar 30 has a curved upper area 31 whereon carriages (6, 7) supporting the slidable wings (8, 9) slide; a first longitudinal inner compartment 33, corresponding to the central compartment 21 of the first section bar 20, having a shape complementary to that of the body 40 of a joint 5; a second longitudinal inner compartment 32, open inferiorly, in which means (10, 11; Figures 7, 8) able to guide the wings (8, 9) supported by the carriages (6, 7) slide and in which means (12, 13; Figures 9, 10) able to limit the travel of the wings (8, 9) are also located; a plurality of lateral longitudinal compartments 34, corresponding to the lateral compartments 22 of the first section bar 20, able to house the blocking means 44 belonging to the joint 5.

In the embodiment shown in Figure 3, the second section bar 30 has two lateral compartments 34 on each of its longer sides.

Advantageously, the second section bar 30 also has lateral longitudinal compartments (only one whereof is designated with the numeric reference 35 in each of the three views of Figure 3) able to house means for levelling and stiffening the structure 1 (constituted, for example, by a bottom wall, by a lateral wall or by a metal "pad" that bears an adjustable foot to level the structure 1) not described herein because they are known in themselves.

At least at one end of a portion of the second section bar 30 is also present a through hole (corresponding to the through hole 23 of Figure 2 and omitted in Figure 3 for graphic representation simplicity) in which are engaged fastening means 45 belonging to a joint 5 to fasten the joint 5 to the portion of the second section bar 30.

Figure 4 schematically shows an exploded front view (Figure 4a), an exploded top view (Figure 4b), an exploded lateral view (Figure 4c) and an exploded perspective view (Figure 4d) of a joint 5 able to couple to a cross member 3 or 4 an upright 2 and/or another cross member 3 or 4.

The joint 5 comprises a body 40, terminating with a widened area 41, in which are drilled two through holes (not visible in Figure 4) into which through screws 43 engaging blocking means 44 are inserted and a compartment 46 in which the fastening means 45, able to be engaged in the through hole 23 present at least at one end of a portion of section bar (20, 30) to fasten the joint 5 to the portion of section bar (20, 30), are located.

Advantageously, the blocking means 44 are constituted by a tapped insert whose width does not exceed the entry width L of the lateral longitudinal compartments 22 and 34 of the section bars 20 and 30, i.e. the width of the lateral longitudinal compartments 22 and 34 at the surface of the section bars 20 and 30.

In the embodiment shown in Figure 4, the fastening means 45 are constituted by a telescopic screw which comprises a first element 45' whose outer shape is complementary to that of the compartment 46 and having a threaded axial hole and a second element 45" having a threaded stem to be screwed into the threaded hole of the first element 45'; the first and the second element (45', 45") have a head whose shape is complementary to that of the through hole 23, present at one end of a portion of section bar (20, 30), in which they are engaged to fasten the joint 5 to the portion of section bar (20, 30) when the elements (45', 45") of the junction means 45 are unscrewed with respect to each other.

The widened area 41 has a plurality of recesses (only one whereof has been designated with the numeric reference 47 in Figures 4b and 4d), distributed along its periphery, which provide it with a shape similar to that of the first section bar 20, as can easily be verified by comparing Figures 2b and 4b to each other.

The recesses 47 are able to receive, in the crossing points between an upright and a cross member, the panels for closing the furniture item, if present, thereby avoiding additional work to remove the corners of the panels at the aforesaid crossing points.

Moreover, the widened area 41 has, at the through holes, two (substantially) square guiding projections 42, whose side is no greater than the width of the lateral longitudinal compartments 22 and 34 of the section bars 20 and 30.

A possible procedure for coupling by means of a joint 5 a cross member (3, 4), constituted by a portion of a section bar (20, 30), to an upright 2 and/or to another cross member (3, 4) is the following:
- the blocking means 44 of a joint 5 are inserted in the lateral longitudinal compartments (22, 34) of the upright 2 or of the other cross member (3, 4) and they are locked in place with the through holes 43; and
- the body 40 of the joint 5 is inserted into the end of the cross member (3, 4) and it is locked in place by inserting the ends of the fastening means 45' and 45" into the through hole 23 present at one end of the cross member (3, 4).

Figure 5 schematically shows a front view, a top view, a lateral view and a perspective view of a carriage 6 able to bear an outer wing 8 of a structure 1 according to the invention.

The carriage 6 comprises an "L" shaped bracket 51 whose horizontal arm 53 has a central hole in which an adjusting bolt 57 slides, whereto a body 56 bearing a wheel 59 (Figure 5a) able to slide on the curve area 31 of the second section bar 30 is fastened; preferably, the arm 53 also bears two guiding pins 58 of the body 56, which are inserted in two holes present in the upper part of the body 56.

The vertical arm 52 of the bracket 51, to be fastened to the outer wing 8, has a plurality of holes 54 (Figure 5d) for the fastening screws and, preferably, two anchoring and fastening pins 55 to be inserted in corresponding holes drilled in the outer wing 8.

In the embodiment shown in Figure 5, the body 56 is constituted by a "U" bent metal sheet element, whereto is welded the adjustment bolt 57 (fastened in position by means of nut and lock nut or by means of another functionally equivalent reversible fastening means), which bears the axis of rotation of the wheel 59, preferably mounted on a ball bearing.

Figure 6 schematically shows a carriage 7 able to bear an inner wing 9 of a structure 1 according to the invention, which differs from the carriage 6 shown in Figure 5 essentially in that the horizontal arm 63 that bears the wheel 69 is shorter than the arm 53 which, in the carriage 6 shown in Figure 5, bears the wheel 59.

In Figure 6d the holes 64 are hidden by the body 66.

The other elements of the carriage 7 shall not be described herein because they are substantially identical to the corresponding elements of the carriage 6 of Figure 5.

Figure 7 schematically shows a lateral view (Figure 7a), a front view (Figure 7b) and two perspective views (Figures 7c and 7d) of the means 10 able to guide an outer wing 8 borne by the carriage 6 of Figure 5.

The guiding means 10 comprise a bracket 71, shaped as an inverted "L", to be applied on the lower inner face of the outer wing 8, whose vertical arm 72 - to be fastened to the outer wing 8 - has a plurality of holes (only one whereof has been designated with the numeric reference 74) for the fastening screws and, preferably, two anchoring and fastening pins 75 to be inserted in corresponding holes drilled in the outer wing 8.

The horizontal arm 73 of the bracket 71 has a central hole in which slides an adjustment bolt 77 which bears a guiding wheel 78 (Figures 7c and 7d) able to slide in the second inner compartment 32, open inferiorly, of the second section bar 30; the arm 73 also has a pair of threaded lateral holes 76, in one whereof is placed a pivot pin 79 able to be engaged with locking means (13; Figure 10) of the outer wing 8.

In the embodiment illustrated in Figure 7 the pivot pin 79 is situated to the left of the bolt 77 (Figure 7c) if the outer wing 8 opens rightwards, to the right of the bolt 77 (Figure 7d) if the outer wing 8 opens leftwards.

Moreover, the adjustment bolt 77 and the pivot pin 79 are fastened in position by means of nut and lock nut (or by another functionally equivalent reversible fastening means) and the guiding wheel 78 is preferably mounted on a ball bearing.

Figure 8 schematically shows the means 11 able to guide an inner wing 9 borne by the carriage 7 of Figure 6, which differ from the guiding means 10 shown in Figure 7 in that the bracket 81 is "L" shaped and it is applied on the upper inner face of the inner wing 9 and in that the horizontal arm 83 that bears the bolt 87 and the wheel 88 is shorter than the horizontal arm 73 that, in the guiding means 10 shown in Figure 7, bears the bolt 77 and the wheel 78.

Advantageously, the pivot pins 89 of the guiding means 11 are longer than the pivot pin 79 of the guiding means 10.

Moreover, the pivot pins 89 can be omitted (Figure 8c) or be positioned either both to the right and to the left of the bolt 87 (Figure 8d).

The other elements of the guiding means 11 shall not be described herein because they are substantially identical to the guiding means 10 of Figure 7.

Figure 9 schematically shows a front view, a top view, a lateral view and a perspective view of the means 12 able to limit the travel of an inner wing 9, as well as the aforesaid means 12 inserted in the second longitudinal inner compartment 32 (Figure 9e) of the portion of the second section bar 30 (Figure 3) which constitutes a cross member 4.

The means 12, preferably made of a plastic material, are located in the inner area (in the upper area in Figure 9e) of the compartment 32 and comprise a "U" shaped body 90 (whose width is smaller than the inner width of the area of the compartment 32 in which it is inserted) and a fastening area 91 (whose width does not exceed the inner width of the area of the compartment 32 in which it is inserted) in which fastening means 92 constituted, for example, by a telescopic screw and anyway not described herein because they are known in themselves, are located.

Advantageously, the pivot pin 79 belonging to the guiding means 10 of an outer wing 8 has such length as to be engaged in the "U" shaped body 100 of the means 13 (Figure 10) but not to be engaged in the "U" shaped body 90 of the means 12 located in the inner area of the compartment 32, thereby enabling the outer wing 8 to be superposed to an inner wing 9, whilst the pivot pins 89 of the guiding means 11 of an inner wing 9, being longer than the pivot pin 79 of the guiding means 10 of an outer wing 8, are engaged in the "U" shaped bodies (90, 100) of the means 12 and 13.

The means 12 are advantageously used if the structure 1 comprises two or more inner wings 9 to prevent two adjacent inner wings 9 from hitting each other during the opening operation; for this purpose, a pair of means 12 is inserted - with the fastening areas 91 adjacent to each other - in the inner area of the compartment 32, made to slide to the intermediate stop points of the two inner wings 9 and fastened in place with the fastening means 92.

If the structure 1 comprises only one inner wing 9, without departing from the scope of the invention it is possible to use the means 12 to fasten an intermediate stop point of the inner wing 9.

Figure 10 schematically shows a front view, a top view, a lateral view and a perspective view of the means 13 able to limit the travel of an outer wing 8, as well as the aforesaid means 13 inserted in the longitudinal inner compartment 32 (Figure 10e) of the portion of the second section bar 30 which constitutes a cross member 4.

The means 13 differ from the means 12 of Figure 9 essentially in that they are positioned at each end of the cross members 4, they are located in the outer area (in the lower area in Figure 10e) of the compartment 32 of the second section bar 30 and they are fastened in place by means of a bolt 102 located in the fastening area 101 of the means 13 and of a nut 103 located in the inner area (in the upper area in Figure 10e) of the compartment 32.

The other elements of the means 13 shall not be described herein because they are substantially identical to the corresponding elements of the means 12 of Figure 9.

Without departing from the scope of the invention, a person skilled in the art can subject the constructive structure for furniture described above to all modifications and improvements suggested by normal experience and/or by the natural evolution of the art.

## Claims

1. A constructive structure for furniture (1), **comprising** a frame constituted by uprights (2) and first and second cross members (3, 4) connected to each other, at right angle, by junction means (5), each of which is able to connect an end of a first or second cross member (3, 4) to an upright (2), the uprights (2) and the first cross members (3) being constituted by portions of a first metal section bar (20) and the second cross members (4) being constituted by portions of a second metal section bar (30), further
comprising slidable wings (8, 9) and carriages (6,7),
**characterised in that** the second section bar (30) used to construct the second cross members (4) positioned on the front part of the furniture item has a curved upper area (31) whereon carriages (6, 7) supporting the slidable wings (8, 9) slide; a first longitudinal inner compartment (33) having a shape complementary to that of a body (40) belonging to a junction means (5); a second longitudinal inner compartment (32), open inferiorly, in which means (10, 11) able to guide the wings (8, 9) supported by the carriages (6, 7) slide; a plurality of lateral longitudinal compartments (34), able to house blocking means (44) belonging to the junction means (5).

2. The constructive structure (1) claimed in claim **1, characterised in that** the first section bar (20) has a rectangular section and **in that** it has a central longitudinal compartment (21) whose shape is complementary to that of a body (40) belonging to the junction means (5) and a plurality of lateral longitudinal compartments (22) able to house blocking means (44) belonging to the junction means (5).

3. The constructive structure (1) claimed in claim **2, characterised in that** the first section bar (20) has two lateral longitudinal compartments (22) on each of its longer sides and one lateral longitudinal compartment (22) on each of its shorter sides.

4. The constructive structure (1) claimed in claim **1, characterised in that** in the second longitudinal inner compartment (32) of the second metal section bar (30) means (12, 13) able to limit the travel of the wings (8, 9) are also located.

5. The constructive structure (1) claimed in claim **1, characterised in that** the second section bar (30) has two lateral longitudinal compartments (34) on each of its longer sides.

6. The constructive structure (1) claimed in claim **1, characterised in that** the second section bar (30) also has lateral longitudinal compartments (35) able to house means for levelling and stiffening the structure (1).

7. The constructive structure (1) claimed in claim **1, characterised in that**, at least at one end of a portion of the first or of the second section bar (20, 30), a through hole (23) is present, in which fastening means (45), belonging to a junction means (5) and able to fasten the junction means (5) to the portion of the first or of the second section bar (20, 30), are engaged.

8. The constructive structure (1) claimed in claim 1, **characterised in that** the junction means (5) comprises a body (40), terminating with a widened area (41), which has through holes in which through screws (43) engaging blocking means (44) are inserted and a compartment (46), in which fastening means (45) able to fasten the junction means (5) to a portion of the first or of the second section bar (20, 30) are located.

9. The constructive structure (1) claimed in claims **7** and **8, characterised in that** the fastening means (45) are able to be engaged in the through hole (23) present at least at one end of a portion of the first or of the second section bar (20, 30).

10. The constructive structure (1) claimed in claims **1, 2** and **8, characterised in that** the blocking means (44) are constituted by a tapped insert whose width does not exceed the entry width (L) of the lateral longitudinal compartments (22, 34) of the first and of the second section bars (20, 30).

11. The constructive structure (1) claimed in claims **7** and **8, characterised in that** the fastening means (45) are constituted by a telescopic screw which comprises a first element (45'), having an outer shape that is complementary to that of the compartment (46) of the body (40) of the junction means (5) and a threaded axial hole, and a second element (45") having a threaded stem to be screwed in the threaded hole of the first element (45'), the first and the second element (45', 45") having a head with a shape complementary to that of the through hole (23) present at least at one end of a portion of the first or of the second section bar (20, 30).

12. The constructive structure (1) claimed in claim **8, characterised in that** the widened area (41) has a plurality of recesses (47) distributed along its periphery and able to receive, in the crossing points between an upright (2) and a first or second cross member (3, 4), panels for closing the furniture item.

13. The constructive structure (1) claimed in claim **1, 2** and **8, characterised in that** the widened area (41) also has, at the through holes present in the body (40) of the junction means (5), two square guiding projections (42) whose side is no greater than the width of the lateral longitudinal compartments (22, 34) of the first and of the second section bars (20, 30).

14. The constructive structure (1) claimed in at least one of the previous claims, **characterised in that**, to couple by means of a joint (5) a first or second cross member (3, 4), constituted by a portion of section bar (20, 30), to an upright (2) and/or to another first or second cross member (3, 4):
- the blocking means (44) of the joint 5 are inserted in the lateral longitudinal compartments (22, 34) of the upright (2) or of the other first or second cross member (3, 4) and they are locked in place with the through holes (43); and
- the body (40) of the joint (5) is inserted into the end of the first or second cross member (3, 4) and it is locked in place by inserting the ends of the fastening means (45', 45") into the through hole (23) present at one end of the first or second cross member (3, 4).

## Patentansprüche

1. Aufbaustruktur für Möbelstücke (1), umfassend einen Rahmen, der durch Steher (2) und erste und zweite Querelemente (3, 4) gebildet ist, welche durch Verbindungsmittel (5) in einem rechten Winkel verbunden sind, wovon jedes fähig ist, ein Ende eines ersten oder zweiten Querelements (3, 4) mit einem Steher (2) zu verbinden, wobei die Steher (2) und die ersten Querelemente (3) durch Abschnitte einer ersten metallenen Profilstange (20) gebildet sind, und die zweiten Querelemente (4) durch Abschnitte einer zweiten metallenen Profilstange (30) gebildet sind, und ferner umfassend verschiebbare Flügel (8, 9) und Schlitten (6, 7),
**dadurch gekennzeichnet, dass** die zweite Profilstange (30), die verwendet wird, um die zweiten Querelemente (4) aufzubauen, und die am Vorderteil des Möbelstücks positioniert ist, Folgendes aufweist: eine gebogene obere Fläche (31), auf der Schlitten (6, 7), die die verschiebbaren Flügel (8, 9) tragen, gleiten; einen ersten länglichen inneren Raum (33), der eine Form aufweist, die zu jener eines Körpers (40), der zu einem Verbindungsmittel (5) gehört, komplementär ist; einen zweiten länglichen inneren Raum (32), der unten offen ist, und in dem Mittel (10, 11), welche fähig sind, die durch die Schlitten (6, 7) getragenen Flügel (8, 9) zu führen, gleiten; und mehrere seitliche längliche Räume (34), die fähig sind, Sperrmittel (44), welche zu dem Verbindungsmittel (5) gehören, aufzunehmen.

2. Aufbaustruktur (1) nach Anspruch 1, **dadurch gekennzeichnet, dass** die erste Profilstange (20) einen rechteckigen Querschnitt aufweist, und dass sie Folgendes aufweist: einen zentralen länglichen Raum (21), dessen Form zu jener eines Körpers (40), welcher zu dem Verbindungsmittel (5) gehört, komplementär ist, und mehrere seitliche längliche Räume (22), die fähig sind, Sperrmittel (44), welche zu dem Verbindungsmittel (5) gehören, aufzunehmen.

3. Aufbaustruktur (1) nach Anspruch 2, **dadurch gekennzeichnet, dass** die erste Profilstange (20) an jeder ihrer längeren Seiten zwei seitliche längliche Räume (22) aufweist, und an jeder ihrer kürzeren Seiten einen seitlichen länglichen Raum (22) aufweist.

4. Aufbaustruktur (1) nach Anspruch 1, **dadurch gekennzeichnet, dass** sich im zweiten länglichen inneren Raum (32) der zweiten metallenen Profilstange (30) auch Mittel (12, 13) befinden, die fähig sind, die Bewegung der Flügel (8, 9) zu beschränken.

5. Aufbaustruktur (1) nach Anspruch 1, **dadurch gekennzeichnet, dass** die zweite Profilstange (30) an jeder ihrer längeren Seiten zwei seitliche längliche Räume (34) aufweist.

6. Aufbaustruktur (1) nach Anspruch 1, **dadurch gekennzeichnet, dass** die zweite Profilstange (30) auch seitliche längliche Räume (35) aufweist, die fähig sind, Mittel zum Nivellieren und Versteifen der Struktur (1) aufzunehmen.

7. Aufbaustruktur (1) nach Anspruch 1, **dadurch gekennzeichnet, dass** zumindest an einem Ende eines Abschnitts der ersten oder der zweiten Profilstange (20, 30) eine Durchgangsöffnung (23) vorhanden ist, in der ein Befestigungsmittel (45), das zu einem Verbindungsmittel (5) gehört und fähig ist, das Verbindungsmittel (5) an dem Abschnitt der ersten oder der zweiten Profilstange (20, 30) zu fixieren, in Eingriff steht.

8. Aufbaustruktur (1) nach Anspruch 1, **dadurch gekennzeichnet, dass** das Verbindungsmittel (5) Folgendes umfasst: einen Körper (40), der mit einem verbreiterte Bereich (41) endet, welcher Durchgangsöffnungen aufweist, in die Durchgangsschrauben (43), die mit Sperrmitteln (44) eingreifen, eingesetzt sind, und einen Raum (46), in dem sich ein Befestigungsmittel (45) befindet, das fähig ist, das Verbindungsmittel (5) an einem Abschnitt der ersten oder der zweiten Profilstange (20, 30) zu befestigen,

9. Aufbaustruktur (1) nach Anspruch 7 und 8, **dadurch gekennzeichnet, dass** das Befestigungsmittel (45) fähig ist, in der Durchgangsöffnung (23), die sich in zumindest einem Ende eines Abschnitts der ersten oder der zweiten Profilstange (20, 30) befindet, in Eingriff gebracht zu werden.

10. Aufbaustruktur (1) nach Anspruch 1, 2 und 8, **dadurch gekennzeichnet, dass** die Sperrmittel (44) durch einen Gewindeeinsatz gebildet sind, dessen Breite die Gesamtbreite (L) der seitlichen länglichen Räume (22, 34) der ersten und der zweiten Profilstange (20, 30) nicht übersteigt.

11. Aufbaustruktur (1) nach Anspruch 7 und 8, **dadurch gekennzeichnet, dass** das Befestigungsmittel (45) durch eine Teleskopschraube gebildet ist, die ein erstes Element (45') mit einer Außenform, welche zu jener des Raums (46) des Körpers (40) des Verbindungsmittels (5) und einer mit einem Gewinde versehenen axialen Öffnung komplementär ist, und ein zweites Element (45,") mit einem Gewindeschaft zum Schrauben in die mit einem Gewinde versehene Öffnung des ersten Elements (45') umfasst, wobei das erste und das zweite Element (45', 45") einen Kopf mit einer Form aufweisen, die zu jener der Durchgangsöffnung (23), welche an zumindest einem Ende eines Abschnitts der ersten oder der zweiten Profilstange (20, 30) vorhanden ist, komplementär ist.

12. Aufbaustruktur (1) nach Anspruch 8, **dadurch gekennzeichnet, dass** der verbreiterte Bereich (41) mehrere Aussparungen (47) aufweist, die entlang seines Umfangs verteilt sind und fähig sind, an den Schnittpunkten zwischen einem Steher (2) und einem ersten oder zweiten Querelement (3, 4) Platten zum Schließen des Möbelstücks aufzunehmen.

13. Aufbaustruktur (1) nach Anspruch 1, 2 und 8, **dadurch gekennzeichnet, dass** der verbreiterte Bereich (41) ferner an den Durchgangsöffnungen, die im Körper (40) des Verbindungsmittels (5) vorhanden sind, zwei quadratische Führungsvorsprünge (42) aufweist, deren Seite nicht größer als die Breite der seitlichen länglichen Räume (22, 34) der ersten und der zweiten Profilstange (20, 30) ist.

14. Aufbaustruktur (1) nach zumindest einem der vorhergehenden Ansprüche, **dadurch gekennzeichnet, dass** zum Koppeln eines ersten oder zweiten Querelements (3, 4), das durch einen Abschnitt einer Profilstange (20, 30) gebildet ist, mittels einer Verbindung (5) mit einem Steher (2) und/oder einem anderen ersten oder zweiten Querelement (3, 4)
- die Sperrmittel (44) der Verbindung (5) in die seitlichen länglichen Räume (22, 34) des Stehers (2) oder des anderen ersten oder zweiten Querelements (3, 4) eingesetzt werden und mit den Durchgangsöffnungen (43) arretiert werden; und
- der Körper (40) der Verbindung (5) in das Ende des ersten oder des zweiten Querelements (3, 4) eingesetzt wird und durch Einsetzen der Enden des Befestigungsmittels (45', 45") in die Durchgangsöffnung (23), die an einem Ende des ersten oder zweiten Querelements (3, 4) vorhanden ist, arretiert wird.

## Revendications

1. Structure de construction pour des meubles (1), comprenant un cadre constitué de montants (2) et des premiers et deuxièmes éléments transversaux (3, 4) reliés les uns aux autres en formant un angle droit, par des moyens d'assemblage (5) capables de relier chacun une extrémité d'un premier ou deuxième élément transversal (3, 4) avec un montant (2), les montants (2) et les premiers éléments transversaux (3) étant constitués par des portions d'une première barre à section métallique (20), et les deuxièmes éléments transversaux (4) étant constitués par des portions d'une deuxième barre à section métallique (30), comprenant en outre des ailes coulissantes (8, 9) et des chariots (6, 7),
**caractérisée en ce que** la deuxième barre à section (30) utilisée pour construire les deuxièmes éléments transversaux (4), positionnée du côté frontal du meuble, possède une zone supérieure courbe (31) sur laquelle coulissent les chariots (6, 7) supportant les ailes coulissantes (8, 9) ; un premier compartiment intérieur longitudinal (33) possédant une forme complémentaire à celle d'un corps (40) appartenant à un moyen d'assemblage (5) ; un deuxième compartiment intérieur longitudinal (32), ouvert inférieurement, dans lequel coulissent des moyens (10, 11) capables de guider les ailes (8, 9) supportées par les chariots (6, 7) ; une pluralité de compartiments longitudinaux latéraux (34) capables de loger un moyen de blocage (44) appartenant au moyen d'assemblage (5).

2. Structure de construction (1) selon la revendication 1, **caractérisée en ce que** la première barre à section (20) présente une section rectangulaire et **en ce qu'**elle possède un compartiment longitudinal central (21) dont la forme est complémentaire à celle d'un corps (40) appartenant au moyen d'assemblage (5), ainsi qu'une pluralité de compartiments longitudinaux latéraux (22) capables de loger un moyen de blocage (44) appartenant au moyen d'assemblage (5).

3. Structure de construction (1) selon la revendication 2, **caractérisée en ce que** la première barre à section (20) possède deux compartiments longitudinaux latéraux (22) de chacun de ses côtés plus longs, et un compartiment longitudinal latéral (22) de chacun de ses côtés plus couns.

4. Structure de construction (1) selon la revendication 1, **caractérisée en ce que** des moyens (12, 13) capables de limiter le déplacement des ailes (8, 9) sont également placés dans le deuxième compartiment intérieur longitudinal (32) de la deuxième barre à section métallique (30).

5. Structure de construction (1) selon la revendication 1, **caractérisée en ce que** la deuxième barre à section (30) possède deux compartiments longitudinaux latéraux (34) de chacun de ses côtés plus longs.

6. Structure de construction (1) selon la revendication 1, **caractérisée en ce que** la deuxième barre à section (30) possède également des compartiments longitudinaux latéraux (35) capables de loger un moyen pour niveler et rigidifier la structure (1).

7. Structure de construction (1) selon la revendication 1, **caractérisée en ce qu'**à au moins une extrémité d'une portion de la première ou de la deuxième barre à section (20, 30), il est prévu un trou de passage (23) dans lequel sont engagés des moyens de fixation (45) appartenant à un moyen d'assemblage (5), capables de fixer le moyen d'assemblage (5) à la portion de la première ou de la deuxième barre à sections (20, 30).

8. Structure de construction (1) selon la revendication 1, **caractérisée en ce que** le moyen d'assemblage (5) comprend un corps (40) se terminant par une zone élargie (41) possédant des trous de passage dans lesquels sont insérées des vis traversantes (43) engageant un moyen de blocage (44), et un compartiment (46) dans lequel se situent des moyens de fixation (45) capables de fixer le moyen d'assemblage (5)'à une portion de la première ou de la deuxième barre à section (20, 30).

9. Structure de construction (1) selon les revendications 7 et 8, **caractérisée en ce que** les moyens de fixation (45) peuvent être engagés dans le trou de passage (23) présent au moins à une extrémité d'une portion de la première ou de la deuxième barre à section (20, 30).

10. Structure de construction (1) selon les revendications 1, 2 et 8, **caractérisée en ce que** les moyens de blocage (44) sont constitués d'un insert taraudé, dont la largeur ne dépasse pas la largeur d'entrée (L) des compartiments longitudinaux latéraux (22, 34) des première et deuxième barres à section (20, 30).

11. Structure de construction (1) selon les revendications 7 et 8, **caractérisée en ce que** les moyens de fixation (45) sont constitués d'une vis télescopique comprenant un premier élément (45') présentant une forme extérieure complémentaire à celle du compartiment (46) du corps (40) du moyen d'assemblage (5) et un trou axial fileté, ainsi qu'un deuxième élément (45") possédant une tige filetée à visser dans le trou fileté du premier élément (45'), les premier et deuxième éléments (45', 45") possédant une tête avec une forme complémentaire à celle du trou de passage (23) présent au moins à une extrémité d'une portion de la première ou de la deuxième barre à section (20, 30).

12. Structure de construction (1) selon la revendication 8, **caractérisée en ce que** la zone élargie (41) possède une pluralité de renfoncements (47) répartis le long de sa périphérie, capables de recevoir, dans les points de croisement entre un montant (2) et un premier ou un deuxième élément transversal (3, 4), des panneaux destinés à fermer le meuble.

13. Structure de construction (1) selon les revendications 1, 2 et 8, **caractérisée en ce qu'**au niveau des trous de passage présents dans le corps (40) du moyen d'assemblage (5), la zone élargie (41) possède également deux saillies de guidage carrées (42) dont le côté n'est pas plus grand que la largeur des compartiments longitudinaux latéraux (22,34) des première et deuxième barres à section (20, 30).

14. Structure de construction (1) selon l'une au moins des revendications précédentes, **caractérisée en ce que**, pour accoupler un premier ou deuxième élément transversal (3, 4) constitué d'une portion de barre à section (20, 30) à un montant (2) et/ou à un autre premier ou deuxième élément transversal (3, 4) à l'aide d'un moyen d'assemblage (5):
- les moyens de blocage (44) du moyen d'assemblage (5) sont insérés dans les compartiments longitudinaux latéraux (22, 34) du montant (2) ou de l'autre premier ou deuxième élément transversal (3, 4), et sont bloqués en place avec les trous de passage (43) ; et
- le corps (40) de l'élément d'assemblage (5) est inséré dans l'extrémité du premier ou deuxième élément transversal (3, 4) et bloqué en place en insérant les extrémités des moyens de fixation (45', 45") dans le trou de passage (23) présent à une extrémité du premier ou deuxième élément transversal (3, 4).
